# EUROPEAN PATENT APPLICATION

(11) **EP 2 267 433 A1**
(43) Date of publication of application: **29.12.2010**
(21) Application number: 09163910.4
(22) Date of filing: 26.06.2009
(51) Int. Cl.: G01N 21/45

(54) **An optical sensor, a system, a method and a computer program for determining a property of a fluid**

(71) Applicant: Nederlandse Organisatie voor Toegepast -Natuurwetenschappelijk Onderzoek TNO, 2628 VK Delft (NL)
(72) Inventor: Yang, Shangjiong, 2542 PW Den Haag (NL); Yousefi, Mirvais, 2628 VK Delft (NL)
(74) Representative: Hatzmann, Martin

(57) **Abstract**

The invention relates to optical sensor (10) for determining a property of an electrically conductive fluid, comprising an input waveguide (3a) for receiving a broadband optical signal; an optical ring resonator (7) having a coupler (5) in optical communication with the input waveguide for filtering out a frequency component from the broadband optical signal for travelling in the optical ring resonator; an output waveguide (3b) for transporting the remaining broadband optical signal towards a detector, a modifier for altering a resonant frequency of the optical ring resonator, wherein the optical ring resonator comprises an inner surface (8) arranged to be submersed in the fluid and the modifier comprises an electrolysis system comprising a first electrode arranged in contact with the inner surface and the second electrode arranged at a distance from the first electrode across the conductive fluid within the optical ring resonator, said modifier being arranged to generate gas bubbles on the inner surface in use. The invention further relates to a method and a computer program for determining a property of a fluid.

## Description

### FIELD

The invention relates to an optical sensor, a system, a method and a computer program for determining a property of a conductive fluid, for example an electrolyte. More in particular, the invention relates to an optical sensor, a system, a method and a computer program for determining a property of a conductive fluid using a resonant frequency shift of an optical ring resonator.

### BACKGROUND

An embodiment of an optical sensor as is set forth in the opening paragraph is known from US 7, 145, 660. In the known embodiment the optical sensor comprises an optical signal source generating an input broadband optical signal, a sensing element in optical communication with the optical signal source, a detector in optical communication with the sensing element. The sensing element comprises two or more resonant cavity loops having a common resonant frequency near at least one frequency of the input broadband optical signal, wherein one of the resonant cavity loops is exposed to an external parameter adapted to modify the resonant frequency of the exposed resonant cavity loop. As a result the output signal changes and the detector generates a signal representative of a change occurred in the output optical signal in response to the external parameter. As a result, the external parameter may be determined.

It is a disadvantage of the known optical sensor that a relatively complex architecture of he sensor's elements is required for enabling though sensing.

### SUMMARY OF THE INVENTION

It is an object of the invention to provide an optical sensor for determining a parameter of an electrically conductive fluid, which is simple, yet accurate and reliable.

To this end the sensor according to the invention comprises:
- an input waveguide for receiving a broadband optical signal;
- an optical ring resonator having a coupler in optical communication with the input waveguide for filtering out a frequency component from the broadband optical signal for travelling in the optical ring resonator;
- an output waveguide for transporting the remaining broadband optical signal towards a detector;
- a modifier for altering a resonant frequency of the optical ring resonator, wherein
the optical ring comprises an inner surface arranged to be submersed in the fluid and the modifier comprises an electrolysis system comprising a first electrode arranged in contact with the inner surface and the second electrode arranged at a distance from the first electrode across the conductive fluid within the optical ring resonator, said modifier being arranged to generate gas bubbles on the inner surface in use.

The technical measure of the invention is based on the insight that by changing an environment of the optical ring resonator, for example by generating gas bubbles using electrolysis on a surface of the optical ring resonator submerged in the conductive fluid the resonant frequency of the optical ring resonator can be changed. Such change is found to be a direct measure of specific physical and/or chemical properties of the fluid. It will be appreciated that although reference is made to a ring resonator, any suitably shaped loop, like a race-track, may be used for this purpose.

By supplying a broad band optical signal into this resonant structure using a suitably arranged waveguide and a coupler, the light is forced to pass through the resonator which will filter out a resonant frequency from the broadband optical signal and will return the remaining optical signal into the output waveguide. By submerging the inner surface of the optical ring resonator (i.e. the surface inside the resonator structure) in the conductive fluid conceived to be analyzed, the environment of the ring resonator and, therefore, its resonant frequency are directly influenced by the properties of the liquid.

As the environment is subjected to a change due to generation of gas bubbles pursuant to electrolysis, the resonant frequency of the ring resonator would change causing a change in a frequency of an optical component to be filtered out. By detecting and/or monitoring this change properties of the liquid may be determined or monitored, respectively.

It will be appreciated that a physical principle underlying the bubble formation during electrolysis is known per se, for example from Sh. Yang et al "Elecrolytically generated nanobubbles on high orientated pyrolytic graphite surfaces", Langmuir 2009, 25, 1466-1474.

By integrating a ring resonator with a bubble generation system a perturbation of the environment in a direct vicinity of the ring resonator is achieved. It will be appreciated that chemical composition of the bubbles, their movement with respect to the inner surface, density of the bubbles on the inner surface and size of the bubbles will cause a pre-determined shift in the resonance frequency of the ring resonator, which can be correlated with properties of the conducting fluid.

Accordingly, such shift can be determined and can be used for determining a sought property of the electrically conductive fluid in which the inner surface of the ring resonator is submerged.

It will be appreciated that in order to obtain an absolute value of a property of the fluid a calibration is required. Those skilled in the art would readily appreciate what kind of calibration experiments may be necessary for allowing absolute determination of the sought parameter.

For example, the inner surface of the ring resonator may be submerged in a known electrically conducting fluid. Then, a number of experiments may be carried out for determining a resonant frequency shift as a function of applied voltage across the first electrode and the second electrode. Next, for the same electrically conductive fluid chemical composition may be changed, for example gas concentration therein may be changed. Accordingly, an additional set of calibration data may be required for oxygen concentration of 10%, 20%, 30%, etc. Then, the same experiments may be carried out for a different liquid flows and for different temperatures, as the resonance frequency is also dependent on these parameters. In order to expand the calibration data to different electrically conductive fluids, these experiments have to be carried out for these fluids under known conditions.

In an embodiment of the optical sensor according to the invention the property to be determined is selected from the group consisting of: a chemical composition of the conducting fluid, gas concentration in the conducting fluid, flow of the conducting fluid.

It is found that these properties may be relevant for monitoring specific systems, like in a gas sensor, oil sensor and/or microfluidic sensor. For enabling determination of a chemical composition of an unknown liquid, one has to have access to calibration data of the resonant frequency shift established per electrolyte per different gas pressure, per different voltage. Such calibration maps may be used for resolving between similar electrolytes should one specific frequency shift be characteristic to different electrolytes or different properties of a given electrolyte. It will be appreciated that the person skilled in the art readily understands how many calibration data and under which conditions is required for a specific case.

In order to enable determination of gas concentration one should preferably a-priori know which electrolyte is under consideration. The calibration data in this case may comprise frequency shift data per applied voltage and for different gas concentration. It will be appreciated that when the calibration data is acquired only one parameter is changed per specific dependency.

In order to determine a flow of the liquid, the calibration data should comprise a reference curve in absence of any flow for a given electrolyte as well as resonant frequency shift as a function of applied voltage and the flow. Again, for resolving between different possible combination of features multiple sensing may be carried out, for example sensing at different applied voltages.

It will be further appreciated that a supplementary measurement may be envisaged in case it is difficult to resolve a value of a property of the fluid. In addition to changing the voltage, one may revert polarities of the first electrode and the second electrode thereby changing a type of gas which will form bubbles on the inner surface. Such experiment should also be supported by a suitable set of calibration data collected beforehand.

In a further embodiment of the optical sensor according to the invention a further optical ring resonator for generating a reference signal is envisaged.

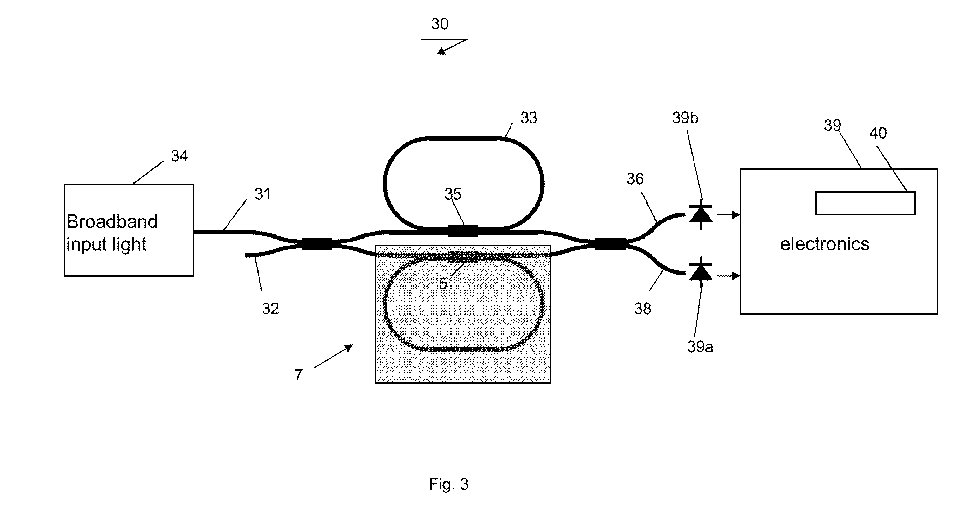

Such arrangement is advantageous as the further ring resonator may be used for compensating for any temperature effects. Such embodiment will be discussed in more detail with reference to Figure 3.

In a still further embodiment of the optical sensor according to the invention the optical ring resonator and/or the further optical ring resonator comprise a silicon-on-insulator (SOI) chip provided with a bottom Si wafer, a top Si layer and a Si02 insulator therebetween, the input waveguide and the output waveguide being provided as grooves in the top Si layer.

It is found that by using a SOI chip a single optical resonator is sufficient for enabling determination of a parameter of an electrolyte in which the optical resonator is submerged. By supplementing the per se known optical resonator with the first electrode and the second electrode cooperating therewith properties of the direct environment of the optical resonator may be changed on demand thereby enabling a simple and reliable determination of the sought parameter of the electrolyte. Such change occurs due to generation of bubbles, preferably nanobubbles, which change the refraction index in the vicinity of the optical resonator.

By providing the optical resonator on a Si wafer, the waveguides may easily be manufactured, for example using etching technique. As a result, a well defined groove acting as an input and output waveguide may be produced. It will be appreciated that for the coupler coupling the input/output waveguide to the ring resonator suitable optical fibres may be used.

In a still further embodiment of the optical sensor according to the invention the first electrode is provided as a metallization layer on a bottom portion of the bottom Si wafer and the second electrode is provided as a protrusion having a base mounted on the SOI chip outside the optical ring resonator and an end portion positioned above the inner surface of the optical ring resonator.

It will be appreciated that any inert metal may be suitable for manufacturing the first electrode and the second electrode. Preferably, gold is used. It will further be appreciated that the curved second electrode may preferably be positioned above a middle portion of the inner surface, however, it may by sufficient to position in somewhere above the inner surface of the optical resonator. Preferably, the distance between the first electrode and the second electrode is in the range of [50...500] microns.

In a still further embodiment of the optical sensor according to the invention it comprises an optical source arranged to generate the broadband optical signal with a wavelength in the range of [1200 - 12000] nm, preferably of about 1550 nm.

It is found that optical signal having the wavelength of at least 1200 nm is particularly suitable for the optical censor according to the invention. The wavelength of the optical signal may be as high as 12000 nm due to suitable transparency of Si in this range of wavelengths. The sources generating the broadband optical signal having wavelength of about 1550 nm are particularly suitable because such sources are relatively cheap.

It will be appreciated that within the context of the invention both continuous spectrum sourced and linear spectrum sources are contemplated. For the former a scanning laser source may be used. Preferably, the bandwidth of the optical signal is about 50 nm.

The system for determining a property of an electrically conducting fluid according to the invention comprises an optical sensor as is set forth in the foregoing, a detector for generating a signal representative to the filtered out frequency component, a processor and a database of calibration data relating frequency shift data and a property of the conducting fluid, the processor being arranged to determine said property based on the said frequency shift data and the said calibration data.

A method of determining a property of an electrically conductive fluid, according to the invention, comprises the steps of:
- providing a broadband optical signal;
- filtering a frequency component out of the broadband optical signal using an optical ring resonator submersed in the fluid;
- transporting the remaining broadband optical signal to a detector;
- altering a condition for said filtering by changing a resonance frequency of the optical ring resonator by generating gas bubbles on a surface of the optical ring resonator submerged in said fluid.

Preferably, the method further comprises the steps of:
- accessing calibration data relating frequency shift data and the property of the conducting fluid;
- determining the property of the fluid based on said calibration data and said frequency shift data.

A computer program product according to the invention comprises instructions causing a processor to carry out the steps of:
- receiving frequency shift data conceived to be analyzed said frequency shift data being representative of a property of a conductive fluid;
- accessing calibration data relating the frequency shift data and the property of the conducting fluid;
- determining the property of the conducting fluid from the said frequency shift data and said calibration data.

It is found that the computer program product according to the invention is a reliable tool enabling determination of a sought property of an electrolyte subjected to experiments as is set forth in the foregoing with high accuracy.

Preferably, a computer program product further comprises an instruction for interpolating the calibration data in case the received frequency shift data do not match entries in the calibration data.

It will be appreciated that various types of interpolation and extrapolation may be envisaged, comprising but not limited to, a linear inter- or extrapolation.

These and other aspects of the invention will be discussed in more detail with reference to drawings, wherein like reference numerals refer to like elements. It will be appreciated that the drawings are presents for illustrative purposes and may not be used for limiting the scope of the appended claims.

### BRIEF DESCRIPTION OF THE DRAWINGS

Figure 1 presents a schematic top view of an optical sensor according to an embodiment of the invention.
Figure 2 presents a schematic cross-sectional view of an optical sensor of Figure 1.
Figure 3 presents a schematic view of a further embodiment of an optical sensor according to the invention.

### DETAILED DESCRIPTION OF THE DRAWINGS

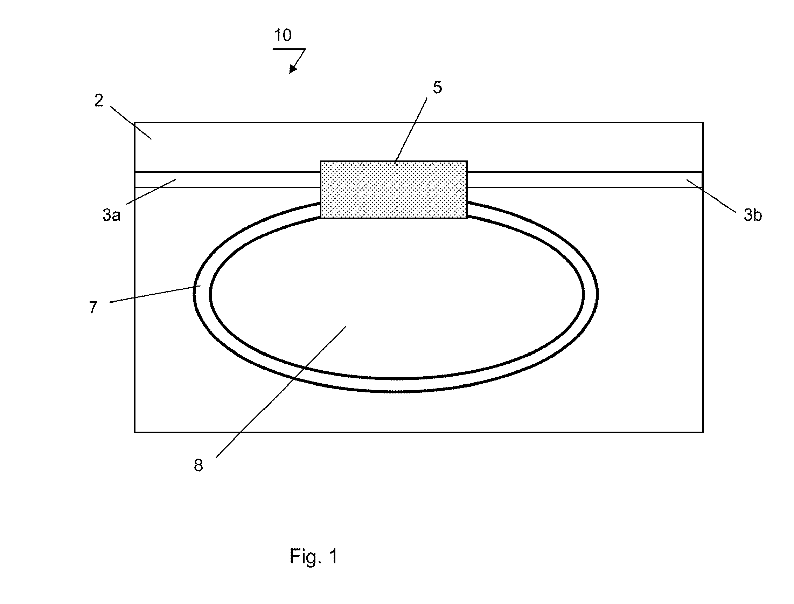

Figure 1 presents a schematic top view of an optical sensor according to an embodiment of the invention. The optical sensor 10 comprises a silicon wafer 2 forming a silicon-on-insulator structure, which is used for forming an input waveguide, an output wave guide and a resonator ring 7 comprising an inner surface 8 which is arranged to be submersed in a suitable electrolyte for detecting and/or for monitoring suitable chemical or physical properties thereof.

In accordance with the invention the optical sensor 10 comprises an input waveguide 3a conceived to conduct a suitable broadband optical signal towards a coupler 5 which is provided in an optical communication with the ring resonator 7. As an effect the ring resonator will filter out a frequency component from the broadband optical signal which corresponds to the resonance frequency of the ring resonator 7. Consequently, the remaining optical signal will be transported by the output waveguide 3b towards a detector (not shown). It will be appreciated that a principle of the optical ring oscillator is known per se and will not be explained here in detail.

In accordance with general considerations the resonant frequency of the ring oscillator will depend on characteristics of the direct environment, for example on a refracting index thereof. In accordance with the invention the characteristics of the environments are changed by allowing the inner surface 8 of the ring oscillator to be submerged in an electrolyte, wherein electrolysis is induced in the electrolyte causing gas bubbles to be deposited on the inner surface 8. Due to the fact that the nature of the gas bubbles is a direct characteristic of a property of the electrolyte, like its chemical composition, type and concentration of gas, flow, etc., and keeping in mind that gas bubbles change the resonant frequency of the ring resonator, it is found that by determining the shift in the resonance frequency of the ring resonator one may directly determine at least the named properties of the electrolyte using calibration data.

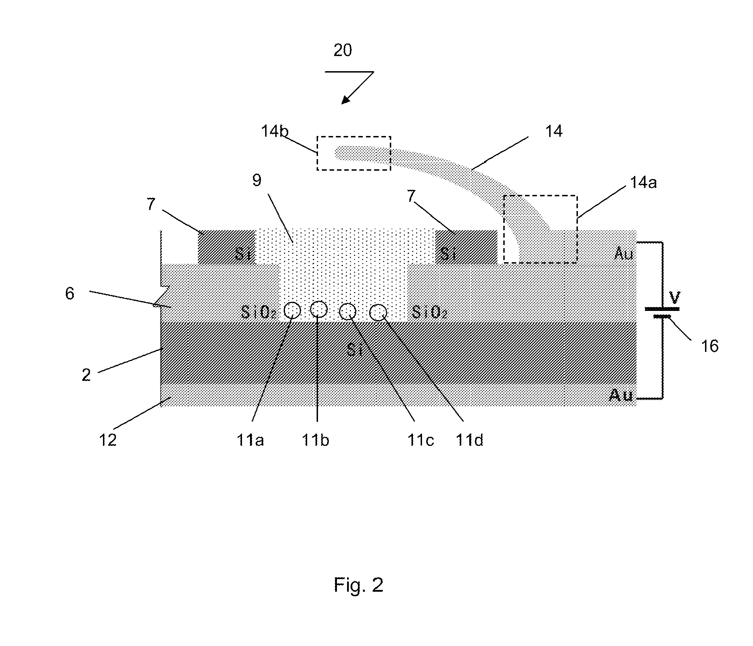

Figure 2 presents a schematic cross-sectional view of an optical sensor of Figure 1, said cross-section being taken across the ring resonator 7. The optical sensor 20 comprises a bottom Si wafer 2 whereon a layer 6 of an insulator, for example Si02 is deposited. On top of the insulator layer 6 a top Si layer 7 is provided. The layer 7 and 6 are etched for forming a groove-like waveguide for allowing optical signal to pass along it. The inner area of the ring resonator 7 is submerged in an electrolyte 9 whose properties are to be detected using bubbles 11a, 11b, 11c, 11d. The bubbles 11a - 11d are generated on the inner surface of the ring resonator (i.e. the surface enclosed by the ring structure) using electrolysis. For this purpose the optical sensor according to the invention is provided with a first electrode 12, for example a metallization layer deposited at a bottom surface of the Si wafer, and a second electrode 14 provided substantially above the inner surface. The second electrode 14 may have a base portion 14 near the ring resonator and an end portion 14b overlaying the first electrode across the electrolyte 9. A DC voltage between the electrodes may be varied between 1 - 5 volts by a suitable source 16.

When the electrolyte 9 is provided, the power is switched on causing the bubbles 11a - 11d to be deposited on the Si surface. The size, chemical nature, density and, possibly, flow rate of the bubbles will cause a corresponding sift in the resonance frequency of the ring resonator 7. By using calibration data prepared beforehand, specific property of the electrolyte may be determined. Preferably, the calibration data is collected to enable determination of the type of electrolyte, the gas species, its concentration, or flow of the liquid.

It will be appreciated that set-up similar to the set-up shown in Figure 2 may be used for carrying out the calibration experiments in cause of which data is collected relating a shift in the resonance frequency of the ring resonator 7 as function of applied voltage, electrolyte type, type of dissolved gas, concentration of the dissolved gas, flow velocity of the liquid, temperature of ambient environment. Those skilled in the art would readily appreciate which set of calibration data is necessary for a particular type of sensing. It will be further appreciated that the calibration data is collected when a single parameter is varied while the other parameters are known.

Figure 3 presents a schematic view of a further embodiment of an optical sensor according to the invention. In this embodiment the optical sensor 30 comprises a first ring resonator 7 as is discussed with reference to Figure 1 and a second ring resonator 33. The broadband optical signal is generated by a suitable light source 34 and is provided to the first ring resonator 7 via the coupler 5 and to the further second ring resonator 33 via the coupler 35. In order to provide the reference signal the second ring resonator 33 is not subjected to the environment, i.e. the electrolyte. It will be appreciated that input 32 may be kept unused or may be used for testing purposes or for measurements using a second optical source. By using a second optical source resolution between different environments meeting the same resonant shift data may be facilitated. The second ring resonator 33 is used for providing a reference signal, for example for keeping track of temperature. Preferably, the optical sensor 30 comprises a Mach-Zender interferometer, where one arm 38 of the interferometer is connected to the optical sensor as is described with reference to Figure 1 and a second arm 36 which is connected to the further optical ring resonator 33 for acquiring the reference signal. Such arrangement may be advantageous when the optical sensor is conceived to be used in an environment having an elevated temperature, as it is found that the peak width of the resulting oscillogram depends on ambient temperature.

The signals from the output waveguides 36, 38 may be analyzed by a single intensity measurement unit, for example a photodiode, or, alternatively two intensity measurement units of the same or different types 39a, 39b may be provided. Finally, the signals from the intensity measurement units 39a, 39b are provided to electronics 39, which may carry out the steps of determining the resonant frequency shift and, consequently, the property of the electrolyte using calibration data. For this purpose, the electronic 39 may communicate with a computer program product 40 operable as is explained in the foregoing. It will be appreciated that the calibration data may be provided in a suitable memory unit (not shown) or may be remotely accessed by the computer program 40, for example using internet.

It will be appreciated that while specific embodiments of the invention have been described above, that the invention may be practiced otherwise than as described. In addition, isolated features discussed with reference to different figures may be combined.

## Claims

1. An optical sensor for determining a property of an electrically conductive fluid, comprising:
- an input waveguide for receiving a broadband optical signal;
- an optical ring resonator having a coupler in optical communication with the input waveguide for filtering out a frequency component from the broadband optical signal for travelling in the optical ring resonator;
- an output waveguide for transporting the remaining broadband optical signal towards a detector;
- a modifier for altering a resonant frequency of the optical ring resonator, wherein
the optical ring resonator comprises an inner surface arranged to be submersed in the fluid and the modifier comprises an electrolysis system comprising a first electrode arranged in contact with the inner surface and the second electrode arranged at a distance from the first electrode across the conductive fluid within the optical ring resonator, said modifier being arranged to generate gas bubbles on the inner surface in use.

2. An optical sensor according to claim 1, wherein the property to be determined is selected from the group consisting of: a chemical composition of the conducting fluid, gas concentration in the conducting fluid, flow of the conducting fluid.

3. An optical sensor according to claim 1 or 2, wherein the modifier is arranged to generate nanobubbles in use.

4. An optical sensor according to any one of the preceding claims, comprising Mach-Zender interferometer, where one arm of the interferometer contains the optical sensor according to claims 1,2 and a second arm contains a further optical ring resonator for generating a reference signal.

5. An optical sensor according to any one of the preceding claims, wherein the optical ring resonator and/or the further optical ring resonator comprise a silicon-on-insulator (SOI) chip provided with a bottom Si wafer a top Si layer and a Si02 insulator therebetween, the input waveguide and the output waveguide being provided as grooves in the top Si layer.

6. An optical sensor according to claim 5, wherein the first electrode is provided as a metallization layer on a bottom portion of the bottom Si wafer and the second electrode is provided as a protrusion having a base mounted on the SOI chip outside the optical ring resonator and an end portion positioned above the inner surface of the optical ring resonator.

7. An optical sensor according to any one of the preceding claims further comprising an optical source arranged to generate the broadband optical signal with a wavelength in the range of [1200 - 12000] nm preferably about 1550 nm.

8. An optical sensor according to claim 7, wherein the bandwidth of the optical signal is about 50 nm.

9. A system for determining a property of an electrically conducting fluid comprising an optical sensor according to any one of the preceding claims, a detector for generating a signal representative to the filtered out frequency component, a processor and a database of calibration data relating frequency shift data and a property of the conducting fluid, the processor being arranged to determine said property based on the said frequency shift data and the said calibration data.

10. A method of determining a property of an electrically conductive fluid, comprising the steps of :
- providing a broadband optical signal;
- filtering a frequency component out of the broadband optical signal using an optical ring resonator submersed in the fluid;
- transporting the remaining broadband optical signal to a detector;
- altering a condition for said filtering by changing a resonance frequency of the optical ring resonator by generating gas bubbles on a surface of the optical ring resonator submerged in said fluid.

11. A method according to claim 10, further comprising the steps of:
- accessing calibration data relating frequency shift data and the property of the conducting fluid;
- determining the property of the fluid based on said calibration data and said frequency shift data.

12. A computer program product comprising instructions causing a processor to carry out the steps of:
- receiving frequency shift data conceived to be analyzed said frequency shift data being representative of a property of a conductive fluid;
- accessing calibration data relating the frequency shift data and the property of the conducting fluid;
- determining the property of the conducting fluid from the said frequency shift data and said calibration data.

13. A computer program product according to claim 12, further comprising an instruction for interpolating the calibration data in case the received frequency shift data does not match entries in the calibration data.
